Europäisches Patentamt

European Patent Office

Office européen des brevets

(11) Veröffentlichungsnummer: **0 264 559**

**A2**

(12) # EUROPÄISCHE PATENTANMELDUNG

(21) Anmeldenummer: **87111515.0**

(22) Anmeldetag: **08.08.87**

(51) Int. Cl.4: **B23Q 5/04**

(30) Priorität: **21.10.86 DE 3635678**

(43) Veröffentlichungstag der Anmeldung:
**27.04.88 Patentblatt 88/17**

(84) Benannte Vertragsstaaten:
**AT BE CH DE ES FR GB IT LI NL SE**

(71) Anmelder: **Wilhelm, Raimund**
**Kellersteige 25**
**D-7080 Aalen-Unterkochen(DE)**

(72) Erfinder: **Wilhelm, Raimund**
**Kellersteige 25**
**D-7080 Aalen-Unterkochen(DE)**

(74) Vertreter: **Schroeter, Helmut et al**
**Bocksgasse 49**
**D-7070 Schwäbisch Gmünd(DE)**

(54) **Spindel mit umschaltbarer Drehzahl.**

(57) Eine Spindel, die ein Differentialgetriebe und eine Umschaltkupplung aufweist. Durch das Differentialgetriebe kann die Drehzahl geändert werden. Die Drehzahl zwischen der einen und der anderen Welle der Kupplung bleibt entweder 1 : 1 oder wird bei Einschaltung des Differentialgetriebes z.B. erhöht. In der anderen Wirkungsrichtung der Spindel wird die Drehzahl entsprechend herabgesetzt. In einem Gehäuse (2) der Spindel ist von dem Differentialgetriebe das eine Getriebeglied (22) drehfest angebracht. Ein verstellbarer Kupplungsteil (12) stellt in jeder seiner beiden Endstellungen eine drehmomentübertragende Verbindung her, und zwar in seiner ersten Endstellung direkt zwischen den beiden Wellen (6, 10) und in seiner zweiten Endstellung zwischen der einen Welle (10) und einem Getriebeglied (30) das Differentialgetriebes. Das Differentialgetriebe ist vorzugsweise als Planetengetriebe (24) ausgebildet und hat Zahnräder (22, 26, 28) als Getriebeglieder. Das Außenrad (22) des Planetengetriebes ist drehfest im Gehäuse (2) angebracht. Bei entsprechender Einstellung der Kupplung überträgt der Planetenradträger (30) ein Drehmoment.

## SPINDEL MIT UMSCHALTBARER DREHZAHL

Die Erfindung bezieht sich auf eine Spindel mit den im Oberbegriff von Anspruch 1 genannten Merkmalen.

Aus der DE-OS 32 02 420 ist eine Spindel dieser Art bekannt. Sie findet Verwendung als Schrauber und gestattet es, eine Schraube mit hoher Drehzahl bis zur Anlage des Kopfes einzudrehen und die Drehzahl dann herabzusetzen, so daß die Schraube mit verrringerter Drehzahl, aber höherem Drehmoment festgezogen werden kann. Zur Änderung der Drehzahl dient dort ein Differentialgetriebe in Form eines Planetengetriebes sowie eine elektromagnetische Schaltkupplung. Bei der einen Stellung der Schaltkupplung wird ein Drehmoment direkt von der Antriebswelle auf die Abtriebswelle übertragen, also ein Übersetzungsverhältnis 1 : 1 erzielt. Bei der anderen Endstellung der Schaltkupplung wird das Planetengetriebe zwischengeschaltet, wodurch eine Getriebeuntersetzung entsteht, also die Abtriebswelle langsamer läuft als die Antriebswelle.

Die Planetenräder sind angeordnet zwischen einem verzahnten Teil der Antriebswelle, der als Sonnenrad fungiert und innerhalb eines Außenrades, das als topfartiger Teil einer Hohlwelle gestellt ist und innenverzahnt ist. Soll das Planetengetriebe wirksam sein und die Drehzahl herabsetzen, so muß die Hohlwelle festgehalten werden, nämlich entgegen einem von der Schraube herrührenden Gegendrehmoment. Hierzu dient ein Freilauf, der andererseits der Hohlwelle einen Umlauf in Antriebsrichtung gestattet, wenn die Hohlwelle durch den Kupplungsteil mit der Antriebswelle verbunden ist.

Durch die Verwendung des Freilaufs ist es nicht möglich, die Abtriebswelle der Spindel im entgegengesetzten Drehsinne anzutreiben, z.B. um eine Schraube aus einem Sackloch wieder herauszudrehen oder weil Schrauben sowohl mit Rechtsgewinde wie mit Linksgewinde eingedreht werden sollen. Es ist auch nicht möglich, die Spindel in entgegengesetzter Wirkungsrichtung zu betreiben, d.h. Antriebs-und Abtriebswelle miteinander zu vertauschen, um statt einer Herabsetzung eine Erhöhung der Drehzahl zu erzielen. Dies ist aber wünschenswert für Spindeln, die nicht nur für Schrauber verwendet werden sollen, wo eine Drehzahlherabsetzung erforderlich ist, sondern auch für Fräser oder Schleifaggregate, wo man bestrebt ist, die nach oben begrenzte Drehzahl des Antriebsmotors zu vervielfachen.

Ferner stellt die Hohlwelle mit dem topfartigen Teil und dessen Innenverzahnung zur Aufnahme der Planetenräder einen komplizierten Bauteil dar, dessen Anfertigung kostspielig ist.

Durch die vorliegende Erfindung soll eine Spindel geschaffen werden, bei der jede ihrer Wellen als Antriebs-oder als Abtriebswelle fungieren kann. Die Spindel soll in der Lage sein, in der einen Wirkungsrichtung eine Eingangsdrehzahl um einen bestimmten Faktor herabzusetzen und in der anderen Wirkungsrichtung eine Eingangsdrehzahl um denselben Faktor zu erhöhen.

Diese Aufgabe wird durch die Erfindung gemäß Anspruch 1 gelöst.

Anspruch 1 bezieht sich allgemein auf ein Differentialgetriebe, das für die Spindel nach der Erfindung verwendbar ist, aber nicht unbedingt ein Planetengetriebe sein muß.

Ein Freilauf kann entfallen, da das eine Getriebeglied (im Ausführungsbeispiel das Außenzahnrad) im Gehäuse drehfest angebracht ist. Ferner überträgt der verstellbare Kupplungsteil nach der Erfindung nicht wie bei der oben genannten Schrift nur in der einen Endstellung, sondern in beiden Endstellungen ein Drehmoment. Durch beide Maßnahmen gemeinsam war es möglich, auf den schwer zu bearbeitenden topfartigen Bauteil zur Aufnahme der Planetenräder zu verzichten.

Weiterbildungen der Erfindung

Das Differentialgetriebe kann wie beim Stand der Technik als Planetengetriebe ausgebildet sein. Zweckmäßigerweise sind die Getriebeglieder zur Übertragung eines hohen Drehmoments Zahnräder. Nach Merkmal c) von Anspruch 2 läßt sich eine vereinfachte Bauweise dadurch erzielen, daß der verstellbare Kupplungsteil unmittelbar auf den Planetenradträger (oder Steg) einwirkt.

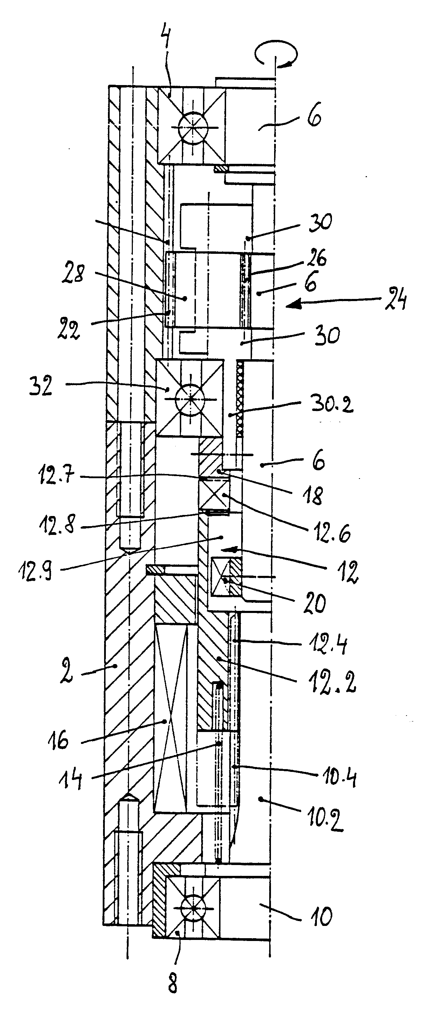

Ein Ausführungsbeispiel mit weiteren Merkmalen der Erfindung wird im folgenden anhand der Zeichnung beschrieben.

Die einzige Abbildung zeigt die eine Hälfte eines axialen Längsschnitts durch die Spindel nach der Erfindung. Begriffe wie "oben" und "unten" in der folgenden Beschreibung beziehen sich auf die Lage der Teile in der Zeichnung, wenngleich die Spindel auch in anderer Orientierung verwendet werden kann.

Die Spindel hat ein Gehäuse 2, von dem zumindest die untere Hälfte aus ferromagnetischem Material besteht. In dem Gehäuse ist durch ein Kugellager 4 der äußere Teil einer ersten Welle 6 gelagert und durch ein Kugellager 8 der äußere Teil einer zweiten Welle 10. Jede dieser beiden Wellen 6 und 10 kann als Antriebswelle oder, bei anderer Wirkungsrichtung, als Abtriebswelle dienen.

Die Welle 10 hat einen Abschnitt, der als Vielkeilwelle 10.2 ausgestaltet ist, hat also eine relativ lange Außenverzahnung 10.4. Eine Kupplungshülse 12 hat an ihrem Hauptabschnitt 12.2 eine dazu passende Innenverzahnung 12.4, mit der sie in die Außenverzahnung 10.4 der Vielkeilwelle 10.2 eingreift. Die Kupplungshülse ist gegenüber der dargestellten oberen Lage abwärts bis in die strichpunktierte untere Lage verschiebbar. Eine Druckfeder 14 ist bestrebt, sie in der oberen Lage zu halten. Innerhalb des Gehäuses ist eine Magnetspule 16 untergebracht. Wird die Magnetspule erregt, so zieht sie die Kupplungshülse 12 entgegen der Wirkung der Druckfeder 14 in die untere Stellung.

Die Kupplungshülse 12 hat oben einen Kupplungsabschnitt 12.6, der an seiner oberen Seite eine Radialverzahnung 12.7 und an seiner unteren Seite eine Radialverzahnung 12.8 aufweist. Zwischen der Radialverzahnung 12.8 und seinem Hauptabschnitt 12.2 hat er eine relativ breite innere Nut 12.9. Er läßt sich axial gegenüber der Welle 6 verschieben. In der dargestellten Lage greift seine Radialverzahnung 12.7 in eine entsprechende Radialverzahnung eines Kupplungsringes 18 ein. In seiner unteren Endstellung greift er in die Radialverzahnung eines Kupplungs sternes 20 ein, der drehfast auf dem unteren Enden der ersten Welle 6 angebracht ist. Wird die Magnetspule 16 erzeugt, so wird also von der ersten Welle 6 auf die zweite Welle 10 oder umgekehrt ein Drehmoment bei einem Übersetzungsverhältnis 1 : 1 übertragen.

In dem oberen Teil des Gehäuses 2 ist das innenverzahnte Außenzahnrad 22 eines Planetengetriebes 24 drehfest untergebracht. Auf der ersten Welle 6 sitzt das Sonnenrad 26 in Form eines Ritzels. Zwischen Außenrad 22 und Sonnenrad 26 sind die Planetenräder 28 untergebracht. Sie sind in einem Planetenradträger (Steg) 30 drehbar gelagert. Wird die erste Welle 6 gedreht, so laufen die Planetenräder und damit der Planetenradträger um, und zwar im gleichen Drehsinne, jedoch mit verringerter Drehzahl; bei der dargestellten Anordnung etwa mit einem Fünftel der Drehzahl der ersten Welle 6. Der Planetenradträger ist einteilig mit einer nach unten ragenden Hülse 30.2 ausgebildet, die die erste Welle 6 umgibt und an der drehfest der Kupplungsring 18 befestigt ist. Die Hülse 30.2 ist an einem Kugellager 32 gelagert.

Bei der dargestellten oberen Lage der Kupplungshülse wird von der Welle 6 her ein Drehmoment übertragen, und zwar über das Sonnenrad 26, die Planetenräder 28, die am Außenzahnrad 22 abrollen, den Planetenradträger 30, auf dessen Hülse 30.2, den Kupplungsring 18 auf den Abschnitt 12.6 und damit auf die Kupplungshülse 12 und von dieser auf die zweite Welle 10. Durch die Untersetzung im Planetengetriebe wird von der ersten Welle 6 her die zweite Welle mit verringerter Drehzahl, z.B. 5 : 1 und entsprechend erhöhtem Drehmoment angetrieben.

Wird dagegen bei der gleichen Einstellung der Kupplungshüsle von der zweiten Welle 10 her angetrieben, so wirkt das Planetengetriebe als Übersetzungsgetriebe. Die Drehzahl erhöht sich somit, und die erste Welle 6 wird mit etwa fünffach höherer Drehzahl angetrieben als die zweite Welle 10.

Die Spindel läßt sich also in der einen Wirkungsrichtung (von oben nach unten) zur Herabsetzung der Drehzahl verwenden, in der anderen Wirkungsrichtung (von unten nach oben) zur Erhöhung der Drehzahl um denselben Faktor. Darüberhinaus läßt sich die Spindel in jeder der Wirkungsrichtungen sowohl rechtsherum wie linksherum antreiben.

## BEZUGSZEICHEN

    2 Gehäuse
    4 Kugellager
    6 erste Welle
    8 Kugellager
    10 zweite Welle
    10.2 Vielkeilwelle
    10.4 Außenverzahnung
    12 Kupplungshülse
    12.2 Hauptabschnitt
    12.4 Innenverzahnung
    12.6 Kupplungsabschnitt
    12.7, 12.8 Radialverzahnung
    12.9 Nut
    14 Druckfeder
    16 Magnetspule
    18 Kupplungsring
    20 Kupplungsstern
    22 Außenzahnrad
    24 Planetengetriebe
    26 Sonnenrad
    28 Planetenrad
    30 Planetenradträger
    30.2 Hülse
    32 Kugellager

## Ansprüche

1. Spindel mit folgenden Bauteilen:
    a) einem Gehäuse (2),
    b) zwei in dem Gehäuse drehbar gelagerten Wellen (6, 10), von denen die eine zum Antrieb, die andere zum Abtrieb dient,
    c) einem Differentialgetriebe zur Änderung von Drehzahl und Drehmoment zwischen den Wellen (6, 10),

d) einer Umschaltkupplung mit einem elektromagnetisch verstellbaren Kupplungsteil (12) zum Ein-und Ausschalten des Differentialgetriebes (24),

**gekennzeichnet** durch folgende Merkmale:

e) eines der Getriebeglieder des Differentialgetriebes ist in dem Gehäuse (2) drehfest angebracht,

f) der verstellbare Kupplungsteil (12) stellt in jeder seiner beiden Endstellungen eine drehmomentübertragende Verbindung her, und zwar in seiner ersten Endstellung zwischen beiden Wellen (6, 10) und in seiner zweiten Endstellung zwischen der einen Welle (10) und einem Getriebeglied (30) des Differentialgetriebes.

2. Spindel nach Anspruch 1, wobei

a) das Differentialgetriebe ein Planetengetriebe (24) ist, dessen Getriebeglieder insbesondere Zahnräder (22, 26, 28) sind,

**gekennzeichnet** durch folgende Merkmale:

b) das drehfest im Gehäuse angebrachte Getriebeglied ist das Aussenrad (22) des Planetengetriebes.

c) das durch den verstellbaren Kupplungsteil (Kupplungshülse 12) betätigbare Getriebeglied ist der Steg oder Planetenradträger (30) des Planetengetriebes.

WiL-13-ep